# EUROPÄISCHE PATENTANMELDUNG

(11) **EP 0 672 843 A1**
(43) Veröffentlichungstag der Anmeldung: **20.09.1995**
(21) Anmeldenummer: 95102718.4
(22) Anmeldetag: 25.02.1995
(51) Int. Cl.: F16F 3/087, F16F 1/36

(54) **Schraubendruckfeder**

(30) Priorität: 19.03.1994 DE 4409443
(71) Anmelder: Piepenstock, Friedhelm, D-99842 Ruhla (DE); Piepenstock, Reiner, D-99842 Ruhla (DE); Piepenstock, Peter, D-99842 Ruhla (DE)
(72) Erfinder: Piepenstock, Friedhelm, D-58579 Schalksmühle (DE)
(74) Vertreter: Hassler, Werner, Dr.

(57) **Zusammenfassung**

Eine Schraubendruckfeder, die an beiden Stirnenden Abschlußringe (2) mit dem Durchmesser des Schraubenganges (1) aufweist und als Kunststoffspritzgußteil ausgebildet ist. Das technische Problem ist die Bereitstellung von korrosionsbeständigen und leichtgewichtigen Schraubendruckfedern die für einen automatischen Einbau geeignet sind. Die Abschlußringe (2) von nebeneinander angeordneten Schraubendruckfedern (1) sind durch Brücken (3) stoffschlüssig miteinander zu einem Band (3) verbunden.

## Beschreibung

Die Erfindung betrifft eine Schraubendruckfeder.

Schraubendruckfedern aus Kuinststoff sind aus dem DE-GM 19 41 529 und dem DE-GM 19 42 371 bekannt. Diese Schraubendruckfedern sind leichgewichtig und daher für einen automatische Verarbeitung nicht geeignet. Besonders in Zuführgeräten lassen sich solche leichtgewichtigen Teile kaun handhaben.

Aufgabe der Erfindung ist die Bereitstellung von korrosionsbeständigen und leichtgewichtigen Schraubendruckfedern die für einen automatischen Einbau geeignet sind.

Diese Aufgabe wird nach der Erfindung dadurch gelöst, daß die Abschlußringe (2) von nebeneinander angeordneten Schraubendruckfedern (1) durch Brücken (3) stoffschlüssig miteinander zu einem Band (3) verbunden sind.

Die Erfindung unterscheidet sich insofern vom Stand der Technik, als mehrere Schraubendruckfedern ein Band bilden, das einen guten Zusammenhalt hat. Dieses Band läßt sich einfach handhaben und zuführen, so daß die Schraubendruckfedern unmittelbar vor dem Einbau vereinzelt werden können. Das Band läßt sich in einer Montagemaschine verarbeiten. Eine Einzelausrichtung und Einzelzuführung der einzelnen Schraubendruckfeder entfällt. Dadurch wird die Handhabbarkeit wesentlich verbessert. Die Schraubendruckfedern werden erst unmittelbar vor dem positionrichtigen Einbau in der Montagemaschine vereinzelt. Dieses Band läßt sich mit Hilfe eines taktweise arbeitenden Spritzgießwerkzeugs auch als endloses Band herstellen, wodurch sich weitere Rationalisierungseffekte erreichen lassen.

Eine optimale Ausbildung der Schraubendruckfedern wird dadurch erzielt, daß die Schraubendruckfedern (1) innerhalb des Bandes mit ihren Achsen senkrecht zur Bandlängsrichtung und parallel zueinander angeordnet sind.

Als Kunststoff ist ein Thermoplast oder ein Elastomer geeignet.

Eine besonders hohe Steifigkeit der Schraubendruckfeder wird dadurch erzielt, daß der Schraubengang (1) an einem durchgehenden axialen Schaft (4) anliegt. Die Schraubendruckfeder ist so korkenzieherartig ausgebildet.

Die Schraubendruckfeder erlaubt derat eine optimale Anpassung an eine beliebige Federcharakteristik, daß die Schraubendruckfeder in axialer Richtung Abschnitte unterschiedlicher Federsteifigkeit aufweist. Die Ausbildung als Spritzgußteil ermöglicht durch Formänderung eine Anpassung an beliebige Charakteristiken.

Eine Anpassung wird in einfacher Weise dadurch erreicht, daß der Querschnitt und/oder die Ganghöhe der Schraubengänge in axialer Richtung der Schraubendruckfeder unterschiedlich ausgebildet sind.

Eine weiche Charakteristik in den Endbereichen und eine harte Charakteristik im Mittelbereich wird dadurch erzielt, daß die Schraubendruckfeder in den Endbereichen einen geringeren Querschnitt und im Mittelbereich einen größeren Querschnitt der Schraubengänge aufweist. Dies ist bei Rüclschlagventilen besonders vorteilhaft, weil die weiche Charakteristik der Endbereiche ein schnelles Schließen des Rückschlagventils sicherstellt.

Ausführungsbeispiele der Erfindung werden anhand der Zeichnung erläutert, in der darstellen:
Fig. 1 eine Anordnung von Schraubendruckfedern als Band,
Fig. 2 eine Draufsicht zu Fig. 1,
Fig. 3 eine Schraubendruckfeder mit durchgehendem Schaft
Fig. 4 einen Schnitt nach der Lnie IV-IV in Fig. 3,
Fig. 5 eine Schraubendruckfeder mit veränderlicher Steigung der Federcharakteristik und
Fig. 6 eine abgewandelte Federcharkteristik.

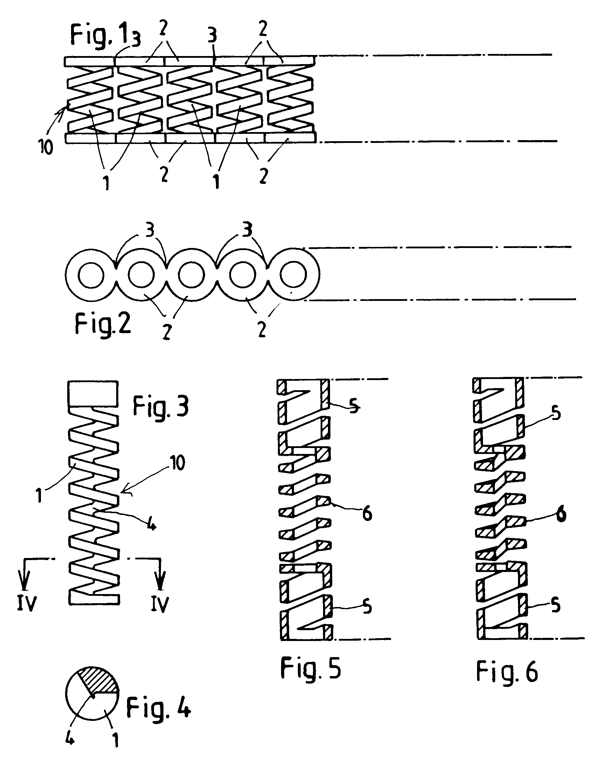

Fig. 1 stellt eine Mehrzahl von mit ihren Achsen parallel nebeneinander angeordneten eingängigen Schraubendruckfedern 10 dar. Die Schraubendruckfedern 10 weisen an beiden Stirnenden Abschlußringe 2 auf, in die der jeweilige Schraubengang 1 einläuft. Der Schraubengang 1 kann auch mehrgängig ausgebildet sein. Benachbarte Abschlußringe 2 sind durch Brücken 3 miteinander verbunden, so daß man eine Anordnung in Form eines Bandes von Schraubendruckfedern 1 erhält.

Die Schraubendruckfedern sind als Kunststoffspritzgußteile aus einem Thermoplast oder einem Elastomer ausgebildet. Die Anordnung als Band ist für eine automatische Zufuhr der Schraubendruckfedern an einer Montagemaschine besonders zweckmäßig.

Das Band kann eine bestimmte Anzahl von Schraubendruckfedern umfassen. Das Band kann auch endlos sein. Dieses hängt von dem benutzten Spritzgießwerkzeug ab.

Die Schraubendruckfeder 10 nach den Fig. 3 und 4 ist um einen durchgehenden axialen Schaft 4 ausgebildet und hat infolgedessen eine hohe Steifigkeit im Gegensatz zu der kernlosen Schraubendruckfeder nach den Fig. 1 und 2.

Durch den Querschnitt des Schaftes 4 oder den Durchmesser des Kerndurchgangs sowie durch durch die Gangzahl des Schraubenganges kann man die Steifigkeit der Schraubendruckfeder dem jeweiligen Anwendungsfall optimal anpassen.

Fig. 5 zeigt eine Schraubendruckfeder mit veränderlicher Steigung der Federchrakteristik. Die Endabschnitte 5 der Schraubendruckfeder haben vergleichsweise großen Querschnitt gegenüber dem Mittelabschnitt 6 mit geringerem Querschnitt. Dieses bedeutet, beim Zusammendrücken der Schraubendruckfeder zunächst der vergleichsweise weiche Mittelabschnitt 6 zusammengedrückt wird. Danach erst werden die harten Endabschnitte 5 wirksam.

Fig. 6 zeigt eine umgekehrte Form der Federcharakteristik. Die Endabschnitte 5 sind infoge des geringeren Querschnitts vergleichsweise weich, der Mittelabschnitt 6 infolge des größeren Querschnitts hart. Dieses bedeutet, daß beim Zusammendrücken der Schraubendruckfeder zunächst die weichen Endabschnitte 5 wirksam werden. Erst Anschließend wird der weiche Mittelabschnitt 6 wirksam. Diese Ausbildung ist für eine Feder in einem Rückschlagventil vorteilhaft, damit der Ventilkörper beim Wirksamwerden der Schraubendruckfeder schnellstens in Schließstellung kommt.

## Patentansprüche

1. Schraubendruckfeder, die an beiden Stirnenden Abschlußringe (2) mit dem Durchmesser des Schraubenganges (1) aufweist und als Kunststoffspritzgußteil ausgebildet ist, dadurch gekennzeichnet, daß die Abschlußringe (2) von nebeneinander angeordneten Schraubendruckfedern (1) durch Brücken (3) stoffschlüssig miteinander zu einem Band (3) verbunden sind.

2. Schraubendruckfeder nach Anspruch 1, dadurch gekennzeichnet, daß die Schraubendruckfedern (1) innerhalb des Bandes mit ihren Achsen senkrecht zur Bandlängsrichtung und parallel zueinander angeordnet sind.

3. Schraubendruckfeder nach Anspruch 1 oder 2, dadurch gekennzeichnet, daß der Kunststoff ein Thermoplast ist.

4. Schraubendruckfeder nach Anspruch 1 oder 2, dadurch gekennzeichnet, daß der Kunststoff ein Elastomer ist.

5. Schraubendruckfeder nach einem der Ansprüche 1 bis 4, dadurch gekennzeichnet, daß der Schraubengang (1) an einem durchgehenden axialen Schaft (4) anliegt.

6. Schraubendruckfeder nach einem der Ansprüche 1 bis 4, dadurch gekennzeichnet, daß die Schraubendruckfeder in axialer Richtung Abschnitte unterschiedlicher Federsteifigkeit aufweist.

7. Schraubendruckfeder nach Anspruch 6, dadurch gekennzeichnet, daß der Querschnitt und/oder die Ganghöhe der Schraubengänge in axialer Richtung der Schraubendruckfeder unterschiedlich ausgebildet sind.

8. Schraubendruckfeder nach Anspruch 6 oder 7, dadurch gekennzeichnet, daß die Schraubendruckfeder in den Endbereichen einen geringeren Querschnitt und im Mittelbereich einen größeren Querschnitt der Schraubengänge aufweist.
